# FASCICULE DE BREVET EUROPEEN

(11) **EP 3 280 778 B1**
(45) Date de publication et mention de la délivrance du brevet: **12.06.2019**
(21) Numéro de dépôt: 16719035.4
(22) Date de dépôt: 08.04.2016
(51) Int. Cl.: C09K 8/508, C08F 220/58, C08F 290/06

(54) **PROCÉDÉ DE DÉVIATION D'UNE FORMATION SOUTERRAINE**
VERFAHREN ZUR UMLEITUNG EINER UNTERIRDISCHEN FORMATION
METHOD FOR DIVERTING A SUBTERRANEAN FORMATION

(30) Priorité: 10.04.2015 EP 15163252
(43) Date de publication de la demande: 14.02.2018
(73) Titulaire: S.P.C.M. SA, 42160 Andrézieux Bouthéon (FR)
(72) Inventeur: FAVERO, Cédrick, 42610 Saint-Romain-le-Puy (FR); BRAUN, Olivier, 42330 Saint Bonnet les Oules (FR); LEBLANC, Thierry, 42570 Saint Heand (FR)
(74) Mandataire: Cabinet Laurent & Charras
(86) Numéro de dépôt international: PCT/EP2016/057840
(87) Numéro de publication internationale: WO 2016/162532

(56) Documents cités:
- WO-A1-2011/148110
- FR-A1- 2 985 727
- US-A1- 2012 073 809
- US-A1- 2013 233 546
- US-A1- 2014 213 748

## Description

### DOMAINE DE L'INVENTION

La présente invention concerne un procédé de déviation de formations souterraines pétrolifères. Ce procédé met en oeuvre une solution comprenant un copolymère thermosensible qui permet de former un gel de déviation temporaire au sein de la formation souterraine.

La présente invention concerne également un procédé de traitement d'une formation souterraine mettant en oeuvre ce gel de déviation préalablement aux opérations de traitement.

### ETAT ANTERIEUR DE LA TECHNIQUE

L'injection dans des formations souterraines de solutions polymériques visqueuses ou gélifiées constitue une pratique très répandue depuis de nombreuses années afin d'améliorer la récupération d'hydrocarbures (de pétrole et de gaz). Ces solutions polymériques sont notamment mises en oeuvre pour réduire ou supprimer la perméabilité d'une zone ou d'une partie de formation souterraine.

Ces solutions polymériques, une fois sous leur forme gélifiée, sont utilisées pour dévier le flux d'eau ou de gaz vers les zones moins perméables en bloquant de manière permanente les zones de fortes perméabilités. Le blocage de certaines zones peut en effet s'avérer nécessaire étant donné qu'elles peuvent être à l'origine de venues d'eau qui perturbent gravement la récupération des hydrocarbures.

Ces solutions polymériques peuvent également être utilisées dans les techniques de déviation. Ces techniques sont utilisées entre autres dans les opérations de forage, de reconditionnement de puits, de complétion, de stimulation, de récupération tertiaire et de toute sorte de traitements de puits (biocide, anti dépôt, anticorrosion, etc). En particulier, des gels peuvent aider à réaliser des traitements localisés de puits, par déviation des zones afin de permettre le traitement d'autres zones, par exemple, à l'aide d'un fluide de traitement (e.g. traitements acides pour la fissuration des carbonates, consolidation des sables...). Dans ce cas, le gel bloque temporairement les zones ciblées de fortes perméabilités. Ce blocage temporaire permet de dévier le liquide de traitement vers la zone à traiter malgré sa perméabilité ou mouillabilité moins favorable initialement. Pour cela, il faut que le gel soit à la fois stable dans le puits durant toute la durée du traitement mais il faut aussi qu'il puisse être éliminé rapidement après ledit traitement. Il faut enfin qu'il soit facilement injectable, facile à placer et ce relativement loin de la liaison couche-trou si nécessaire.

Un grand nombre de documents relatifs à des gels de déviation ont été publiés ces dernières années. La majeure partie des solutions émises repose sur la réticulation in situ d'un polymère, type polyacrylamide partiellement hydrolysé ou polysaccharides, via l'utilisation de réticulants métalliques (Cr, Al, Zr,...) ou organiques (hexaméthylène tétramine, téréphtaldéhyde, phénol, formaldéhyde). La cinétique de réticulation est retardée afin de permettre l'injection d'une solution fluide et un placement adéquat. Il est même fait état dans la littérature de l'utilisation de solutions de monomères contenant l'amorceur, de manière à provoquer la polymérisation, et par conséquent la formation du gel, directement au fond d'une formation souterraine (WO 2011/081547).

Les solutions envisageables à ce stade sont la génération de radicaux pour la polymérisation radicalaire, via un ou plusieurs amorceur(s) comme le persulfate ou un couple redox. La difficulté principale réside dans le fait que ces amorceurs doivent être présents dans la solution gélifiante dès le départ, pour être actifs au sein du produit. A cet égard, des technologies, souvent compliquées, liées à l'encapsulation ont été envisagées (WO 2011/077337). Les problèmes rencontrés sont des séparations chromatographiques des composants ou des adsorptions différentielles, rendant la réticulation ou la polymérisation plus ou moins contrôlée voire aléatoire.

Quoi qu'il en soit, les gels de déviation à base de polymères fortement épaississant ou viscosifiant doivent être détruits à la fin du traitement, de manière à ce que la formation souterraine traitée retrouve sa perméabilité initiale après la déviation.

L'injection d'enzyme ou d'oxydant est utilisée, mais peut difficilement pénétrer intimement le gel formé, ce qui laisse un endommagement de la zone traitée.

Pour favoriser la dégradation du polymère, des travaux ont également été initiés autour de fonctions chimiques hydrolysables du réticulant (par exemple PEG diacrylate dans le document US 2013/0233546).

Les informations disponibles dans la littérature montrent que les gels de déviation actuellement utilisés nécessitent des technologies compliquées afin de casser le gel. En outre, ces technologies ne garantissent pas l'obtention d'une dégradation complète. Les éventuels résidus de polymères peuvent en effet subsister et ainsi amoindrir la perméabilité de la formation souterraine.

Le problème que se propose de résoudre la présente invention est celui de mettre au point un procédé de déviation de zones de fortes perméabilités, qui n'entraine pas de séparations chromatographiques des composants et qui n'endommage pas la perméabilité de la formation souterraine après un temps défini. La présente invention permet en effet de rétablir la perméabilité initiale de la formation souterraine, à l'issue du traitement de déviation. Contrairement aux procédés de l'art antérieur, aucune intervention ou post-traitement n'est nécessaire pour restaurer la perméabilité initiale.

### EXPOSE DE L'INVENTION

La présente invention concerne un procédé de déviation d'une formation souterraine ou de roches/zones d'exploitations pétrolifères, au moyen de polymères capables de former in situ des gels de déviation temporaires. Cette déviation permet de traiter les formations souterraines éventuellement hétérogènes ou endommagées. Lesdits polymères sont capables de se dégrader sans intervention ou post-traitement. La stabilité du gel est toutefois suffisante pour permettre de mener à bien le traitement de la formation, pendant la durée nécessaire.

Plus précisément, la présente invention concerne un procédé de déviation d'une formation souterraine comportant au moins une étape d'injection dans la formation souterraine, d'une solution aqueuse comprenant au moins un copolymère thermosensible de :
a) au moins un monomère hydrosoluble portant au moins une fonction insaturée susceptible d'être polymérisée pour former un squelette hydrosoluble et ;
b) au moins un macromonomère de formule (I) : 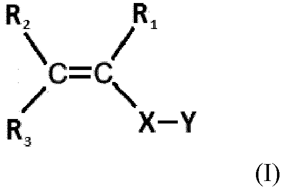 dans laquelle,
   - R₁, R₂ et R₃ indépendamment sont un atome d'hydrogène, un groupe méthyle, COZR₄, CH₂COZR₄, COO⁻M⁺, CH₂COO⁻M⁺ ou X-Y ;
   - Z est NR'₄ ou O ;
   - R₄, R'₄ indépendamment sont un atome d'hydrogène ou un radical carboné, saturé ou insaturé, éventuellement aromatique, linéaire, ramifié ou cyclique, comprenant 1 à 30 atomes de carbone, comprenant de 0 à 4 hétéroatomes choisis dans le groupe comprenant O, N, et S ;
   - M⁺ est un métal alcalin, un métal alcalino-terreux, ou un ammonium ;
   - X est une liaison hydrolysable ester ou amide ;
   - Y est un groupe à LCST dont la température de transition en solution aqueuse est comprise entre 0 et 180°C pour une concentration massique dans l'eau déionisée de 1% dudit groupe Y.

Le copolymère thermosensible comprend au moins un monomère hydrosoluble et au moins un monomère de formule (I). En d'autres termes, le copolymère thermosensible est un copolymère d'au moins un de chacun de ces deux types de monomères.

Par déviation, on entend le blocage temporaire d'une ou plusieurs zones afin d'assurer un traitement sélectif de la formation souterraine. Du fait d'une perméabilité hétérogène de la formation, il existe des passages préférentiels par lesquels le traitement a tendance à passer. En utilisant des moyens de déviation, on empêche le traitement d'aller dans ces passages préférentiels. Cela permet de dévier le traitement vers des zones ciblées. La déviation étant temporaire, elle ne dure que le temps du traitement. La perméabilité initiale de la formation souterraine est rétablie après le traitement.

Le squelette hydrosoluble du copolymère thermosensible peut comprendre au moins un monomère hydrosoluble. Typiquement, le monomère hydrosoluble peut être choisi dans le groupe comprenant les monomères non-ioniques, les monomères anioniques, et les mélanges de monomères non-ioniques et de monomères anioniques.

Le monomère hydrosoluble peut être un monomère non-ionique pouvant notamment être choisi dans le groupe comprenant les monomères vinyliques solubles dans l'eau, et particulièrement l'acrylamide ; le N-isopropylacrylamide ; le N,N-diméthylacrylamide ; la N-vinylformamide ; l'acryloyl morpholine ; le N,N-diéthyle acrylamide ; le N-tert butyl acrylamide ; la N-vinylpyrrolidone ; la N-vinyl caprolactame ; et la diacetone acrylamide. De manière avantageuse, le monomère non-ionique est l'acrylamide.

Selon un mode de réalisation particulier, le copolymère thermosensible comprend avantageusement entre 1 et 99,9 mol% de monomère(s) non-ionique(s), de préférence entre 40 et 95 mol% et plus préférentiellement entre 60 et 90 mol%, par rapport au nombre total de monomères.

Le monomère hydrosoluble peut également être un monomère anionique. Le ou les monomères anioniques pouvant être utilisés dans le cadre de l'invention peuvent être choisis dans un large groupe. Ces monomères peuvent présenter des fonctions acryliques, vinyliques, maléiques, fumariques, malonique, itaconique, allyliques et contenir un groupe carboxylate, phosphonate, phosphate, sulfate, sulfonate, ou un autre groupe à charge anionique. Le monomère anionique peut être sous forme acide ou bien sous forme de sel de métal alcalino-terreux ou de métal alcalin. Des exemples de monomères convenables comprennent l'acide acrylique ; l'acide méthacrylique ; l'acide itaconique ; l'acide crotonique ; l'acide maléique ; l'acide fumarique ; les monomères de type acide fort présentant par exemple une fonction de type acide sulfonique ou acide phosphonique tels que l'acide 2-acrylamido 2-methylpropane sulfonique, l'acide vinylsulfonique, l'acide vinylphosphonique, l'acide allylsulfonique, l'acide allylphosphonique, l'acide styrène sulfonique ; et les sels hydrosolubles de ces monomères comme leurs sels de métaux alcalins, de métaux alcalino-terreux, ou d'ammonium.

Selon un mode de réalisation particulier, le copolymère thermosensible comprend avantageusement entre 1 et 99 mol% de monomère(s) anionique(s), de préférence entre 3 et 80 mol%, et encore plus préférentiellement entre 5 et 50 mol%, par rapport au nombre total de monomères.

De manière optionnelle le squelette du copolymère peut comprendre au moins un monomère cationique.

Le monomère hydrosoluble peut optionnellement être un monomère cationique de type acrylamide, acrylique, vinylique, allylique ou maléique possédant une fonction amine ou ammonium quaternaire. On peut citer, en particulier et de façon non limitative, l'acrylate de diméthylaminoéthyl (ADAME), et le méthacrylate de diméthylaminoéthyle (MADAME) quaternisés ou salifiés, le chlorure de diméthyldiallylammonium (DADMAC), le chlorure d'acrylamido propyltriméthyl ammonium (APTAC) et le chlorure de méthacrylamido propyltriméthyl ammonium (MAPTAC).

Ainsi, selon un mode de réalisation particulier, le copolymère thermosensible comprend avantageusement entre 1 et 99 mol% de monomère(s) cationique(s), de préférence entre 3 et 80 mol%, et encore plus préférentiellement entre 5 et 50 mol%, par rapport au nombre total de monomères.

La liaison hydrolysable X est avantageusement une liaison ester (C=O)-O- ou une liaison amide (C=O)-NR"- avec R" = H ou CH₃.

Il s'agit avantageusement d'une fonction ester.

Cette liaison hydrolysable se dégrade de manière à dissocier le groupement Y du macromonomère de formule (I) au cours du temps. En d'autres termes, elle cause la rupture de la liaison X entre le squelette hydrosoluble et les groupes latéraux.

Le polymère thermosensible perd alors ses propriétés de gélification.

Eu égard à cette fonction hydrolysable et à la présence d'une unité à LCST, le copolymère mis en oeuvre a le double avantage de se dégrader dans le temps en présence d'eau, et d'être thermosensible c'est-à-dire de pouvoir épaissir une solution en fonction de la température. Il ne nécessite donc pas de co-injection de réticulant ou d'additifs pour gélifier, ni d'agent pour le détériorer.

Selon un mode de réalisation avantageux, le pourcentage molaire de macromonomères répondant à la formule (I) dans le copolymère thermosensible est compris entre 0,1 et 10 mol%, de préférence entre 0,5 et 5 mol%, par rapport au nombre total de monomères.

Selon les connaissances générales de l'homme du métier, les groupes à LCST correspondent à des groupes dont la solubilité dans l'eau pour une concentration déterminée, est modifiée au-delà d'une certaine température et en fonction de la salinité. Il s'agit de groupes présentant une température de transition par chauffage définissant leur manque d'affinité avec le milieu solvant. Le manque d'affinité avec le solvant se traduit par une opacification ou une perte de transparence qui peut être due à une précipitation, une agrégation, une gélification ou une viscosification du milieu. La température de transition minimale est appelée « LCST » (température critique inférieure de solubilité, de l'acronyme anglais « Lower Critical Solution Température »). Pour chaque concentration de groupe à LCST, une température de transition par chauffage est observée. Elle est supérieure à la LCST qui est le point minimum de la courbe. En dessous de cette température, le polymère est soluble dans l'eau, au-dessus de cette température, le polymère perd sa solubilité dans l'eau.

D'une manière usuelle, la mesure de la LCST peut se faire visuellement : on détermine la température à laquelle apparaît le manque d'affinité avec le solvant, c'est-à-dire le point de trouble. Le point de trouble correspond à l'opacification de la solution ou perte de transparence.

La LCST peut aussi être déterminée selon le type de transition de phase par exemple par DSC (calorimétrie différentielle à balayage, de l'acronyme anglais « Differential scanning calorimetry »), par une mesure de transmittance ou par une mesure de viscosité.

De préférence, la LCST est déterminée par détermination du point de trouble par transmittance selon le protocole suivant :
La température de transition est mesurée pour le groupe Y pour une solution ayant une concentration massique dans l'eau déionisée de 1 % en poids desdits groupes Y. Le point de trouble correspond à la température à laquelle la solution présente une transmittance égale à 85% ou moins, à une longueur d'onde comprise entre 400 et 800 nm.

En d'autres termes, la température à laquelle la solution présence une transmittance égale à 85% ou moins correspond à la température de transition minimale LCST du groupe Y.

D'une manière générale, une composition transparente présente une valeur de transmittance maximum de la lumière, quelle que soit la longueur d'onde comprise entre 400 et 800 nm, à travers un échantillon de 1 cm d'épaisseur, d'au moins 85 %, de préférence d'au moins 90 %. C'est la raison pour laquelle, le point de trouble correspond à une transmittance de 85% ou moins.

De manière générale, le macromonomère de formule (I) ne nécessite pas de développement de procédé particulier. En effet il peut être obtenu selon toutes les techniques connues de l'homme du métier. Il est généralement synthétisé en deux étapes pouvant être inversées. Plus précisément, il est possible de sélectionner un groupe vinylique, de le fonctionnaliser dans une première étape pour ensuite faire croitre un groupe Y à LCST dans une seconde étape. Les monomères fonctionnalisés sont par exemple l'hydroxypropyl acrylate, l'hydroéthyl méthacrylate, methacrylate de glycidyl éther. Les macromolécules pouvant croitre sont par exemple des alkylènes oxides ou amines, par des techniques de polymérisation ionique.

Alternativement, il est possible de synthétiser le groupe Y à LCST avec un bout fonctionnel, puis le greffer sur le groupement éthylénique.

On peut ainsi citer à titre d'exemple la synthèse du macromonomère à partir du groupe Y de taille et de fonctionnalité contrôlées, effectuée à l'aide d'un amorceur radicalaire ou ionique possédant la fonction chimique recherchée, et/ou en introduisant un agent de transfert substitué par le groupement chimique désiré et/ou par polycondensation.

Dans une première étape on peut citer la télomérisation, qui est un mode de synthèse de groupe Y à LSCT de faibles masses molaires (appelés télomères). Les agents télogènes peuvent être choisis entre autres parmi des thiols, alcools, disulfures, dérivés phosphorés, borés et halogénés. Ils peuvent notamment permettre d'introduire des fonctions spécifiques à l'extrémité des chaînes télomères, par exemple des fonctions silanes, trialkoxysilanes, amines, époxy, hydroxyles, phosphonates, ou acides.

Une fois ces groupes Y à LCST formés, dans une deuxième étape une double-liaison vinylique peut être introduite à l'extrémité de la chaîne afin qu'ils servent de macromonomères pouvant être à leur tour polymérisés.

Les réactions pouvant être mises en oeuvre pour les couplages sur monomères sont multiples : alkylation, estérification, amidation, transestérification ou transamidation...

Selon un mode de réalisation avantageux, les groupes Y à LCST du copolymère thermosensible peuvent être constituées par un ou plusieurs unités choisis parmi les unités suivantes :
- les polyéthers tels que le poly(oxyde d'éthylène) (POE), le poly(oxyde de propylène) (POP), les copolymères statistiques d'oxyde d'éthylène (OE) et d'oxyde de propylène (OP) ; les C10-C12-de (polyétherglycol d'acide gras) (Marlox® KF69, Biodac® 2-32) ;
- les dérivés télomériques à base d'acrylamide N-ou N,N-substitué ayant une LCST telle que définie ci-dessus, tels que les dérivés télomériques de N,N-diéthylacrylamide, les dérivés télomériques de N,N-diméthylacrylamide, les dérivés télomériques de N-isopropylacrylamide, les dérivés télomériques de N-vinylcaprolactame, et les dérivés télomériques d'acryloylmorpholine.

Selon un mode de réalisation particulier, le macromonomère peut être de formule (II) : 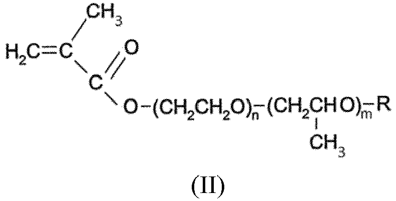 dans laquelle :
n et m sont des nombres entiers compris, indépendant l'un de l'autre, avantageusement entre 2 et 40, les motifs (CH₂CH₂O) et (CH₂CHCH₃O) pouvant être répartis en bloc ou de manière aléatoire.

Selon un mode de réalisation particulier, le macromonomère peut être de formule (III) : 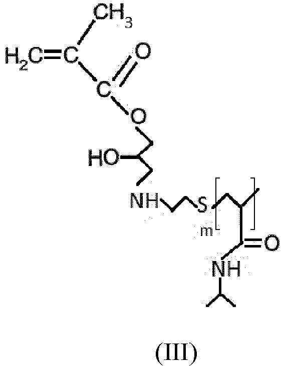 Dans laquelle :
m est un nombre entier compris avantageusement entre 2 et 40.

Comme déjà indiqué, les groupes à LCST du copolymère thermosensible ont une température de transition par chauffage de 0 à 180°C pour une concentration massique dans l'eau déionisée de 1 % en poids desdits groupes à LCST.

Le copolymère thermosensible présente, pour une concentration massique donnée en solution aqueuse et au-delà d'une température critique donnée, des propriétés de viscosification ou propriétés de thermoviscosification.

Ces propriétés de viscosification par chauffage observées au-delà de la température de transition des chaines à LCST sont dues à l'association des points collants entre les chaînes principales.

Ces propriétés viscosifiantes sont observées au-delà de la température de transition et lorsque la concentration en polymère en solution est suffisante pour permettre des interactions entre des groupes à LCST portées par des macromolécules différentes. La concentration minimale nécessaire, appelée « concentration critique d'agrégation ou CAC », est évaluée par des mesures de rhéologie. Elle correspond à la concentration à partir de laquelle la viscosité d'une solution aqueuse de copolymère thermosensible devient supérieure à la viscosité d'une solution du polymère équivalent ne comportant pas de groupes à LCST.

Dans le procédé selon l'invention, la déviation est opérée par injection de la solution aqueuse contenant le polymère thermosensible dans la zone à bloquer temporairement. C'est le changement progressif jusqu'à la température de la formation souterraine qui permet la viscosification. Elle est généralement comprise entre 20 et 200°C.

L'effet épaississant du copolymère thermosensible pourra être adaptée à la nature de la formation souterraine (température) notamment en fonction de la nature du groupement Y et de la quantité molaire en macromonomère, de la salinité et/ou du pH de l'eau utilisée pour préparer la solution aqueuse à injecter, de la concentration en copolymère.

Selon un mode de réalisation avantageux, le copolymère thermosensible présente une température de viscosification avantageusement comprise entre 25 et 140°C, de préférence entre 30 et 120°C, et de manière encore plus avantageuse entre 40 et 100°C.

Typiquement, la solution aqueuse mise en oeuvre dans le procédé de déviation selon l'invention comprend entre 50 et 50000 ppm en poids d'au moins un copolymère thermosensible, plus avantageusement entre 100 et 30000 ppm, et encore plus avantageusement entre 500 et 10000 ppm par rapport au poids de la solution aqueuse polymérique injectée.

De manière avantageuse, la viscosification se fait instantanément une fois que le fluide de déviation a atteint la température de viscosification du polymère, après injection dans la formation souterraine à traiter.

Selon l'invention, le polymère utilisé peut avoir une structure linéaire, branché, réticulé, star (en forme d'étoile) ou comb (en forme de peigne). Ces structures peuvent être obtenues par sélection au choix de l'amorceur, de l'agent de transfert, de la technique de polymérisation telle que la polymérisation radicalaire contrôlée dite RAFT (transfert de chaîne réversible par addition-fragmentation, de l'anglais « reversible-addition fragmentation chain transfer »), NMP (polymérisation en présence de nitroxydes, de l'anglais « Nitroxide Mediated Polymerization ») ou ATRP (polymérisation radicalaire par transfert d'atomes, de l'anglais « Atom Transfert Radical Polymerization »), de l'incorporation de monomères structuraux, de la concentration...

De manière générale, le copolymère thermosensible ne nécessite pas de développement de procédé de polymérisation particulier. En effet, il peut être obtenu selon toutes les techniques de polymérisation bien connues par l'homme de métier. Il peut notamment s'agir de polymérisation en solution ; polymérisation en gel ; polymérisation par précipitation ; polymérisation en émulsion (aqueuse ou inverse); polymérisation en suspension ; ou de polymérisation micellaire.

Le copolymère thermosensible peut se présenter sous forme liquide, gel ou solide lorsque sa préparation inclut une étape de séchage tel que le « spray drying » (séchage par pulvérisation), le séchage sur tambour le séchage micro-ondes ou encore le séchage en lit fluidisé.

Selon un mode de réalisation de l'invention, le copolymère thermosensible peut être obtenu par copolymérisation d'au moins un monomère hydrosoluble et d'au moins un macromonomère de formule (I).

L'homme de métier sait que le copolymère thermosensible peut être obtenu par greffage des unités à LCST sur un copolymère. Dans ce cas, il ne s'agit pas de la copolymérisation d'un monomère présentant lesdites unités LCST. L'introduction des unités à LSCT est réalisée une fois le polymère synthétisé. On peut citer par exemple le brevet WO2014047243 qui décrit cette technique.

De manière avantageuse, le copolymère thermosensible a un poids moléculaire compris entre 100000 et 25000000 g/mol, de préférence 250000 et 20000000 g/mol, et encore plus préférentiellement entre 750000 et 15000000 g/mol.

De manière surprenante, le Demandeur a découvert que le copolymère thermosensible décrit ci-dessus est particulièrement adapté à une utilisation dans les gels de déviation, du fait de la température spécifique d'association de ses unités et de sa viscosification spontanée sans avoir besoin d'un activateur.

Sous vouloir émettre une quelconque théorie, il semblerait que la sélection spécifique des monomères/macromonomères permet d'avoir un effet technique particulier. En effet, en surface, à température ambiante, la solution de polymère est relativement peu visqueuse et reste très facilement injectable. Le polymère en solution est peu sensible à la dégradation mécanique et chimique et peut être simplement préparé dans une eau froide à des concentrations élevées. En fond de puits, lorsque la température change, les groupes Y ayant franchi leur LCST interagissent. Cela provoque une augmentation brutale de la viscosité de la solution. Cette solution présente une viscosité suffisamment élevée à cette température pour permettre une déviation pour un traitement chimique ultérieur. Au bout d'un temps plus ou moins long, la liaison hydrolysable du macromonomère s'hydrolyse et les groupes Y ne participent plus à la formation de la solution visqueuse. Une réduction progressive de viscosité s'opère jusqu'à disparaître totalement après quelques jours rendant ainsi le puits libre de production sans réduction de perméabilité, sans ajout ni en co-injection ni en post traitement d'un agent casseur de gel, encapsulé ou non.

La présente invention concerne également un procédé de traitement d'une formation souterraine comprenant :
- le procédé de déviation selon la présente invention, c'est-à-dire l'injection dans une formation souterraine d'une solution aqueuse comprenant au moins un copolymère thermosensible tel que décrit ci-dessus ;
- l'injection ultérieure d'une solution aqueuse de traitement dans la formation souterraine ;
- l'auto-dégradation du copolymère thermosensible.

Selon l'invention, les opérations de traitement peuvent comprendre par exemple, les opérations de fracturation, les opérations de « gravel packing » (graviers filtrant), les opérations de traitement d'acidification, les opérations de dissolution et élimination du calcaire, ou le traitement de consolidation, l'injection de biocide, d'agent anti-redépôt, prévention des venues de sable.

L'invention et les avantages qui en découlent ressortiront mieux des figures et exemples suivants donnés afin d'illustrer l'invention et non de manière limitative.

### FIGURES

La figure 1 illustre la viscosité d'un copolymère thermosensible ayant une unité à LCST, en fonction de la température.
La figure 2 illustre la viscosité d'un copolymère thermosensible ayant une unité à LCST, en fonction du temps et à température constante.

### EXEMPLES DE REALISATION DE L'INVENTION

### Synthèse d'un copolymère thermosensible ayant une unité à LCST

Cette synthèse est réalisée en deux étapes qui consistent respectivement à préparer un macromonomère et un copolymère par copolymérisation de ce macromonomère.

### 1. Synthèse du macromonomère à unité LCST de formule :

La température de transition du Biodac 2-32 (groupe Y) telle que définie est de 34 - 36 °C.

Dans un réacteur de 1L, nous avons chargé 340,6g de DMF (dimethylformamide), 91,9g d'anhydride méthacrylique et 0,2042g d'EMHQ (ester méthylique d'hydroquinone). Nous avons ajouté à l'aide d'une ampoule de coulée 367,3g de Biodac 2-32 (polyétherglycol d'acide gras) pendant 3 heures, nous avons ensuite chauffé la solution à 60°C pendant 2 heures, puis évaporé le DMF à 60°C sous 2 millibars.

### 2. Synthèse du copolymère thermosensible:

Le copolymère est préparé par polymérisation radicalaire. Dans un réacteur adiabatique de 1,5L nous avons chargé : 48,27g de macromonomère précédemment préparé, 375g d'AMPS, 282,2g d'acrylamide et 578,32g d'eau.

Après un dégazage à l'azote pendant 10min, l'ajout d'un couple réducteur-oxydant sel de Mohr - persulfate de sodium ainsi qu'un amorceur azoïque le Va 044 (2,2'-azobis(2-(2-imidazolin-2-yl)propane) dihydrochlorure) initie la copolymérisation Le produit final est obtenu par broyage et séchage du gel.

### 3. Viscosité en fonction du temps ou de la température

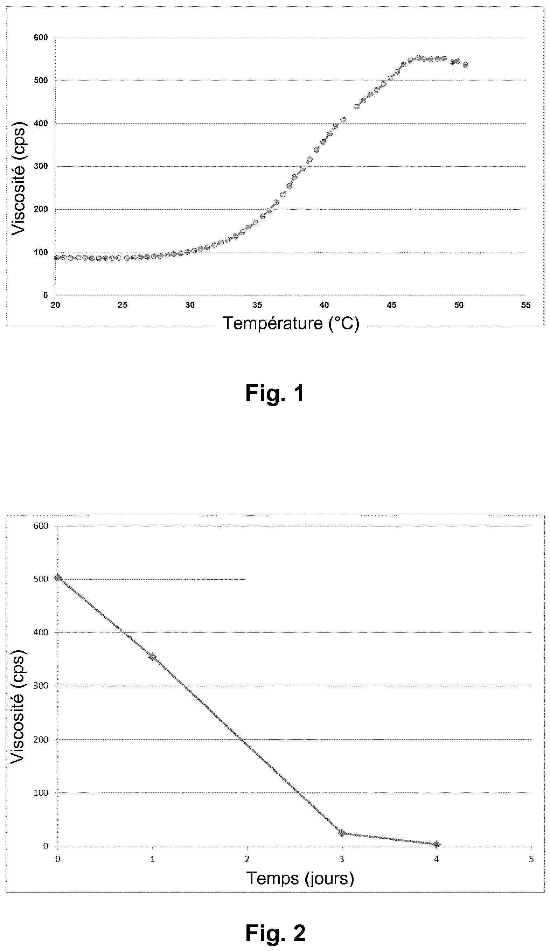

La figure 1 montre l'évolution de la viscosité d'une solution aqueuse à 4% en poids de KCl et 5000 ppm (en poids) du copolymère thermosensible, en fonction de la température.

La figure 2 montre l'évolution de la viscosité de cette solution polymérique, maintenue à une température de 71°C, en fonction du temps. Elle décroit fortement de 500 cps à environ 350 cps au bout de un jour. Elle est quasi nulle au bout de 4 jours.

La viscosité de la solution polymérique est mesurée en utilisant un rhéomètre Bohlin (cone plate, 2°60 mm, 7,34 s⁻¹).

## Revendications

1. Procédé de déviation d'une formation souterraine comportant au moins une étape d'injection dans la formation souterraine, d'une solution aqueuse comprenant au moins un copolymère thermosensible de :
a) au moins un monomère hydrosoluble portant au moins une fonction insaturée susceptible d'être polymérisée pour former un squelette hydrosoluble et ;
b) au moins un macromonomère de formule (I) : 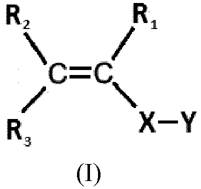 dans laquelle,
- R₁, R₂ et R₃ indépendamment sont un atome d'hydrogène, un groupe méthyle, COZR₄, CH₂COZR₄, COO⁻M⁺, CH₂COO⁻M⁺ ou X-Y ;
- Z est NR'₄ ou O ;
- R₄, R'₄ indépendamment sont un atome d'hydrogène ou un radical carboné, saturé ou insaturé, éventuellement aromatique, linéaire, ramifié ou cyclique, comprenant 1 à 30 atomes de carbone, comprenant de 0 à 4 hétéroatomes choisis dans le groupe comprenant O, N, et S ;
- M⁺ est un métal alcalin, un métal alcalino-terreux, ou un ammonium ;
- X est une liaison hydrolysable ester ou amide ;
- Y est un groupe à LCST dont la température de transition en solution aqueuse est comprise entre 0 et 180°C pour une concentration massique dans l'eau déionisée de 1% dudit groupe Y.

2. Procédé selon la revendication 1, ***caractérisé* en ce que** le monomère hydrosoluble est choisi dans le groupe comprenant les monomères non-ioniques ; les monomères anioniques ; et les mélanges de monomères non-ioniques et de monomères anioniques.

3. Procédé selon la revendication 1, ***caractérisé* en ce que** le monomère hydrosoluble est un monomère non-ionique choisi dans le groupe comprenant : acrylamide, N-isopropylacrylamide ; N,N-diméthylacrylamide ; N-vinylformamide ; acryloyl morpholine ; N,N-diéthyle acrylamide ; N-tert butyl acrylamide ; N-vinylpyrrolidone ; N-vinyl caprolactame ; et diacétone acrylamide.

4. Procédé selon la revendication 1, ***caractérisé* en ce que** le monomère hydrosoluble est un monomère anionique choisi dans le groupe comprenant : acide acrylique ; acide méthacrylique ; acide itaconique ; acide crotonique ; acide maléique ; acide fumarique ; acide 2-acrylamido 2-méthylpropane sulfonique ; acide vinylsulfonique ; acide vinylphosphonique ; acide allylsulfonique ; acide allylphosphonique ; acide styrène sulfonique ; et leurs sels de métaux alcalins, de métaux alcalino-terreux, et d'ammonium.

5. Procédé selon l'une des revendications 1 à 4, ***caractérisé* en ce que** la liaison hydrolysable X est une liaison ester.

6. Procédé selon l'une des revendications 1 à 5, ***caractérisé* en ce que** le copolymère thermosensible comprend entre 0,1 et 10 mol% de macromonomère de formule (I), par rapport au nombre total de monomères.

7. Procédé selon l'une des revendications 1 à 6, ***caractérisé* en ce que** le copolymère thermosensible comprend entre 0,5 et 5 mol% de macromonomère de formule (I), par rapport au nombre total de monomères.

8. Procédé selon l'une des revendications 1 à 7, ***caractérisé* en ce que** le groupe Y est choisi dans le groupe comprenant les polyéthers et les dérivés télomériques à base de dérivés d'acrylamide N- ou N,N-substitué.

9. Procédé selon l'une des revendications 1 à 8, ***caractérisé* en ce que** le groupe Y est choisi dans le groupe comprenant le poly(oxyde d'éthylène) (POE) ; le poly(oxyde de propylène) (POP) ; les copolymères statistiques d'oxyde d'éthylène (OE) et d'oxyde de propylène (OP) ; les dérivés télomériques de N,N-diéthylacrylamide ; les dérivés télomériques de N,N-diméthylacrylamide ; les dérivés télomériques de N-isopropylacrylamide ; les dérivés télomériques de N-vinylcaprolactame ; et les dérivés télomériques d'acryloylmorpholine.

10. Procédé selon l'une des revendications 1 à 9, ***caractérisé* en ce que** le macromonomère est de formule (II) : 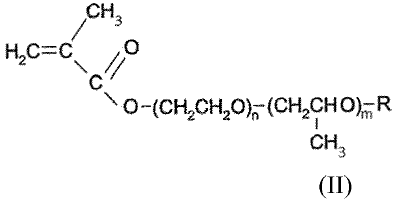 dans laquelle :
n et m sont des nombres entiers compris, indépendant l'un de l'autre, entre 2 et 40, les motifs (CH₂CH₂O) et (CH₂CHCH₃O) étant répartis en bloc ou de manière aléatoire.

11. Procédé selon l'une des revendications 1 à 9, ***caractérisé* en ce que** le macromonomère est de formule (III) : 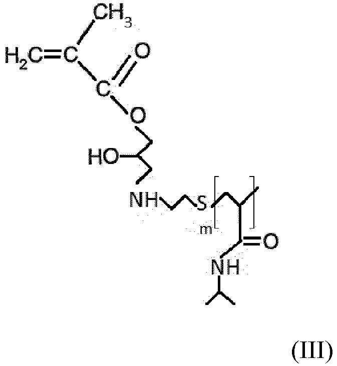 dans laquelle :
m est un nombre entier compris entre 2 et 40.

12. Procédé selon l'une des revendications 1 à 11, ***caractérisé* en ce que** la solution aqueuse injectée comprend entre 50 et 50000 ppm en poids de copolymère thermosensible.

13. Procédé de traitement d'une formation souterraine comprenant successivement :
- le procédé de déviation selon l'une des revendications 1 à 12 ;
- l'injection ultérieure d'une solution aqueuse de traitement dans la formation souterraine ;
- l'auto-dégradation du copolymère thermosensible.

## Patentansprüche

1. Verfahren zum Umleiten einer unterirdischen Formation, umfassend mindestens einen Schritt des Einspritzens einer wässrigen Lösung in die unterirdische Formation, umfassend mindestens ein wärmeempfindliches Copolymer von
a) mindestens einem wasserlöslichen Monomer, das mindestens eine ungesättigte Funktion trägt, die unter Bildung eines wasserlöslichen Grundgerüsts polymerisiert werden kann; und
b) mindestens einem Makromonomer der Formel (I): 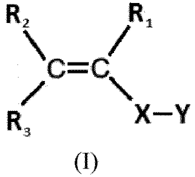 worin
- R₁, R₂ und R₃ unabhängig voneinander ein Wasserstoffatom, eine Methylgruppe, COZR₄, CH₂COZR₄, COO⁻M⁺, CH₂COO⁻M⁺ oder X-Y sind;
- Z NR'₄ oder O ist;
- R₄, R'₄ unabhängig voneinander ein Wasserstoffatom oder ein kohlenstoffhaltiges, gesättigtes oder ungesättigtes, gegebenenfalls aromatisches, lineares, verzweigtes oder cyclisches Radikal mit 1 bis 30 Kohlenstoffatomen und mit 0 bis 4 Heteroatomen, ausgewählt aus der O, N und S umfassenden Gruppe, sind;
- M⁺ ein Alkalimetall, ein Erdalkalimetall oder Ammonium ist;
- X eine hydrolysierbare Ester- oder Amidbindung ist;
- Y eine LCST-Gruppe ist, deren Übergangstemperatur in wässriger Lösung zwischen 0 und 180°C beträgt, bei einer Massenkonzentration in entionisiertem Wasser von 1% der genannten Y-Gruppe.

2. Verfahren gemäß Anspruch 1, **dadurch gekennzeichnet, dass** das wasserlösliche Monomer aus der Gruppe ausgewählt ist, die nichtionische Monomere; anionische Monomere und Gemische von nichtionischen Monomeren und anionischen Monomeren umfasst.

3. Verfahren gemäß Anspruch 1, **dadurch gekennzeichnet, dass** das wasserlösliche Monomer ein nichtionisches Monomer ist, das aus der Gruppe ausgewählt ist, die Acrylamid; N-Isopropylacrylamid; N,N-Dimethylacrylamid; N-Vinylformamid; Acryloylmorpholin; N,N-Diethylacrylamid; N-tert-Butylacrylamid; N-Vinylpyrrolidon; N-Vinylcaprolactam; und Diacetonacrylamid umfasst.

4. Verfahren gemäß Anspruch 1, **dadurch gekennzeichnet, dass** das wasserlösliche Monomer ein anionisches Monomer ist, das aus der Gruppe ausgewählt ist, die Acrylsäure; Methacrylsäure; Itaconsäure; Crotonsäure; Maleinsäure; Fumarsäure; 2-Acrylamido-2-methylpropansulfonsäure, Vinylsulfonsäure, Vinylphosphonsäure, Allylsulfonsäure, Allylphosphonsäure, Styrolsulfonsäure und Alkalimetall-, Erdalkalimetall- oder Ammoniumsalze davon umfasst.

5. Verfahren gemäß einem der Ansprüche 1 bis 4, **dadurch gekennzeichnet, dass** die hydrolysierbare X-Bindung eine Esterbindung ist.

6. Verfahren gemäß einem der Ansprüche 1 bis 5, **dadurch gekennzeichnet, dass** das wärmeempfindliche Copolymer zwischen 0,1 und 10 Mol-% Makromonomer der Formel (I) umfasst, bezogen auf die Gesamtzahl der Monomere.

7. Verfahren gemäß einem der Ansprüche 1 bis 6, **dadurch gekennzeichnet, dass** das wärmeempfindliche Copolymer zwischen 0,5 und 5 Mol-% Makromonomer der Formel (I) umfasst, bezogen auf die Gesamtzahl der Monomere.

8. Verfahren gemäß einem der Ansprüche 1 bis 7, **dadurch gekennzeichnet, dass** die Y-Gruppe aus der Gruppe ausgewählt ist, die Polyether und Telomer-Derivate auf Basis von Derivaten von N- oder N,N-substituiertem Acrylamid umfasst.

9. Verfahren gemäß einem der Ansprüche 1 bis 8, **dadurch gekennzeichnet, dass** die Y-Gruppe aus der Gruppe ausgewählt ist, die Poly(ethylenoxid) (PEO); Poly(propylenoxid) (PPO); statistische Copolymere von Ethylenoxid (EO) und Propylenoxid (PO); Telomer-Derivate von N,N-Diethylacrylamid; Telomer-Derivate von N,N-Dimethylacrylamid; Telomer-Derivate von N-Isopropylacrylamid; Telomer-Derivate von N-Vinylcaprolactam und Telomer-Derivate von Acryloylmorpholin umfasst.

10. Verfahren gemäß einem der Ansprüche 1 bis 9, **dadurch gekennzeichnet, dass** das Makromonomer die Formel (II) aufweist: 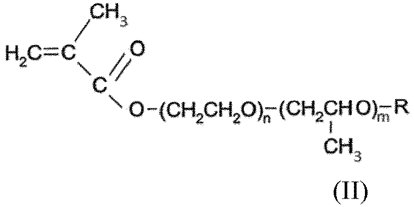 worin
n und m ganze Zahlen sind, die unabhängig voneinander im Bereich zwischen 2 und 40 liegen, wobei die (CH₂CH₂O)- und (CH₂CHCH₃O)-Einheiten blockweise oder zufällig verteilt sind.

11. Verfahren gemäß einem der Ansprüche 1 bis 9, **dadurch gekennzeichnet, dass** das Makromonomer die Formel (III) aufweist: 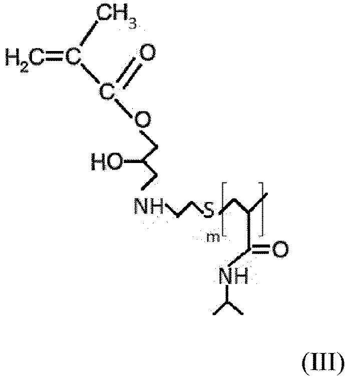 worin
m eine ganze Zahl im Bereich zwischen 2 und 40 ist.

12. Verfahren gemäß einem der Ansprüche 1 bis 11, **dadurch gekennzeichnet, dass** die eingespritzte wässrige Lösung zwischen 50 und 50000 Gew.-ppm eines wärmeempfindlichen Copolymers umfasst.

13. Verfahren zur Behandlung einer unterirdischen Formation, nacheinander umfassend:
- das Umleitungsverfahren gemäß einem der Ansprüche 1 bis 12;
- das anschließende Einspritzen einer wässrigen Behandlungslösung in die unterirdische Formation;
- den Selbstzerfall des wärmeempfindlichen Copolymers.

## Claims

1. Method for diverting an underground formation including at least one step of injecting into the underground formation an aqueous solution comprising at least one heat-sensitive copolymer of:
a) at least one water-soluble monomer having at least one unsaturated functional group capable of being polymerized to form a water-soluble backbone and;
b) at least one macro monomer of formula (I): 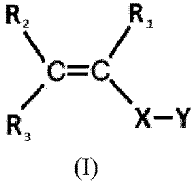 wherein,
- R₁, R₂ and R₃ are, independently, a hydrogen atom, a methyl group, COZR₄, CH₂COZR₄, COO⁻M⁺, CH₂COO⁻M⁺ or X-Y;
- Z is NR'₄ or O;
- R₄, R'₄ are, independently, a hydrogen atom or a carbon-based, saturated or unsaturated, optionally aromatic, linear, branched or cyclic radical comprising 1 to 30 carbon atoms and comprising 0 to 4 heteroatoms selected from the group comprising O, N and S;
- M⁺ is an alkali metal, an alkaline earth metal, or ammonium;
- X is a hydrolyzable ester or amide bond;
- Y is an LCST group of which the aqueous solution transition temperature is in the range between 0 and 180 °C for a mass concentration of 1 % of said group Y in deionized water.

2. Method according to claim 1, ***characterized in that*** the water-soluble monomer is selected from the group comprising non-ionic monomers, anionic monomers, and mixtures of non-ionic monomers and anionic monomers.

3. Method according to claim 1, ***characterized in that*** the water-soluble monomer is a non-ionic monomer selected from the group comprising acrylamide, N-isopropylacrylamide; N,N-dimethylacrylamide; N-vinylformamide; acryloyl morpholine; N,N-diethyl acrylamide; N-tert butyl acrylamide; N-vinylpyrrolidone; N-vinyl caprolactam; and diacetone acrylamide.

4. Method according to claim 1, ***characterized in that*** the water-soluble monomer is an anionic monomer selected from the group comprising: acrylic acid, methacrylic acid, itaconic acid, crotonic acid, maleic acid, fumaric acid, 2-acrylamido 2-methylpropane sulfonic acid, vinylsulfonic acid, vinylphosphonic acid, allylsulfonic acid, allylphosphonic acid, styrenesulfonic acid, and the alkali metal, alkaline earth metal or ammonium salts thereof.

5. Method according to one of claims 1 to 4, ***characterized in that*** the hydrolyzable bond X is an ester bond.

6. Method according to one of claims 1 to 5, ***characterized in that*** the heat-sensitive copolymer comprises between 0.1 and 10 mol% of macromonomer of formula (I), relative to the total number of monomers.

7. Method according to one of claims 1 to 6, ***characterized in that*** the heat-sensitive copolymer comprises between 0.5 and 5 mol% of macromonomer of formula (I), relative to the total number of monomers.

8. Method according to one of claims 1 to 7, ***characterized in that*** the group Y is selected from the group comprising the polyethers and the telomeric derivatives based on N- or N,N-substituted acrylamide derivatives.

9. Method according to one of claims 1 to 8, ***characterized in that*** the group Y is selected from the group comprising poly(ethylene oxide) (PEO), poly(propylene oxide) (PPO), statistical copolymers of ethylene oxide (EO) and propylene oxide (PO); telomeric derivatives of N,N-diethylacrylamide, telomeric derivatives of N,N-dimethylacrylamide, telomeric derivatives of N-isopropylacrylamide, telomeric derivatives of N-vinylcaprolactam, and telomeric derivatives of acryloylmorpholine.

10. Method according to one of claims 1 to 9, ***characterized in that*** the macromonomer is of formula (II): 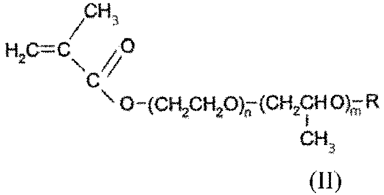 wherein:
n and m are integers that are, independently from each other, between 2 and 40, the (CH₂CH₂O) and (CH₂CHCH₃O) units capable of being distributed together or in a random manner.

11. Method according to one of claims 1 to 9, ***characterized in that*** the macromonomer is of formula (III): 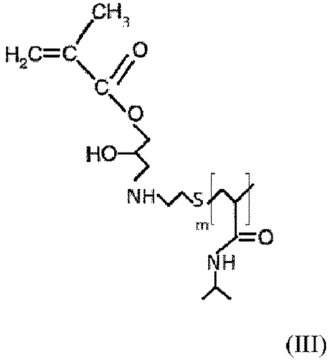 wherein:
m is an integer between 2 and 40.

12. Method according to one of claims 1 to 11 ***characterized in that*** the aqueous solution injected comprises between 50 and 50,000 ppm by weight of heat-sensitive copolymer.

13. Treatment method of an underground formation comprising successively:
- the diverting method according to one of claims 1 to 12;
- the subsequent injection of an aqueous treatment solution into the underground formation;
- the self-degradation of the heat-sensitive copolymer.
